Europäisches Patentamt

European Patent Office

Office européen des brevets

(11) Veröffentlichungsnummer: **0 146 492**
**B1**

(12) **EUROPÄISCHE PATENTSCHRIFT**

(45) Veröffentlichungstag der Patentschrift: **19.12.90**

(51) Int. Cl.⁵: **B 41 J 2/23**

(21) Anmeldenummer: **84730119.9**

(22) Anmeldetag: **08.11.84**

(54) **Verfahren und Matrixdrucker zum Verkleinern und/oder Höhenverschieben von Schriftzeichen.**

(30) Priorität: **19.12.83 DE 3346297**

(43) Veröffentlichungstag der Anmeldung:
**26.06.85 Patentblatt 85/26**

(45) Bekanntmachung des Hinweises auf die
Patenterteilung:
**19.12.90 Patentblatt 90/51**

(84) Benannte Vertragsstaaten:
**AT BE CH FR GB IT LI NL**

(56) Entgegenhaltungen:
**EP-A-0 027 734**
**DE-B-1 205 744**
**US-A-4 236 835**

**IBM TECHNICAL DISCLOSURE BULLETIN, Band
16, Nr. 5, Oktober 1973, Seiten 1594,1595,
Armonk, US; F. TSUI: "Arrangement for data
merging and line splitting in printers"**

**IBM TECHNICAL DISCLOSURE BULLETIN, Band
25, Nr. 7B, Dezember 982, Seite 3699, Armonk,
US; K. Leontiades: "Condensed text printing"**

(73) Patentinhaber: **MANNESMANN
Aktiengesellschaft
Mannesmannufer 2
D-4000 Düsseldorf 1 (DE)**

(72) Erfinder: **Werbach, Johannes, Dipl.-Ing.
Im Knoblach 15
D-7916 Nersingen (DE)**

(74) Vertreter: **Presting, Hans-Joachim, Dipl.-Ing.
et al
Meissner & Meissner Patentanwaltsbüro
Herbertstrasse 22
D-1000 Berlin 33 (DE)**

**Beschreibung**

Die Erfindung betrifft ein Verfahren zum Verkleinern und/oder Höhenverschieben von Schriftzeichen in Matrixdruckern, insbesondere zum Erzeugen von Hochzahlen, Fußnoten u. dgl. innerhalb der vorgegebenen oder verschobener Schriftzeichenhöhe, bei dem die Schriftzeichen aus Impulsen der Datenquelle über einen Zeichengenerator erzeugt und zeilenweise mit einem Matrixdruckkopf der Ein- oder Mehrspalten-Nadelbauart mit in der Spaltenhöhe versetzbaren oder versetzten Drucknadeln in einem oder mehreren Druckpässen gedruckt werden, wobei mit dem Zeichengenerator ein Normalschriftdruckprogramm und zumindest ein gesondertes Kleinschriftdruckprogramm schreibbar sind und aufgrund eines Steuerbefehls für den Zeichengenerator ein Umschalten von dem Normalschriftdruckprogramm auf das Kleinschriftdruckprogramm oder umgekehrt erfolgt.

Die Wiedergabe von Texten, die einer Datenquelle entstammen, ist mit Matrixdruckern in Grenzen variabel. So können mit Matrixdruckern die Schriftzeichen in Schenllschrift oder Schönschrift (sog. nearletter-quality) geschrieben werden, wobei die letztere auf dem überlappenden Aneinandersetzen der Matrixpunkte berührt, womit in allgemeinen allerdings eine geringere Schreibgeschwindigkeit verbunden ist.

Aus der EP—A—0 027 734 ist ein Matrixnadeldruckkopf bekannt, dessen Nadelspalte zwei Schreibzeiten abdeckt. Aufgrund eines solchen Druckkopfes besteht die Möglichkeit, zwei übereinanderliegende, benachbarte Schreibzeilen gleichzeitig zu schreiben oder aber übergroße Zeichen, die die beiden Schreibzeilen und den dazwischenliegenden Abstand überdecken. Demzufolge könnte die Schreibweise in zwei Zeilen gleichzeitig als "Kleinschriftdruckprogramm" und die Schreibweise über die zwei Nadelspalten als "Normalschriftdruckprogramm" betrachtet werden. Es ist daher theoretisch auch möglich, aufgrund des "Normalschriftdruckprogramms" Fußnoten oder Hochzahlen über das "Kleinschriftdruckprogramm" zu erzeugen, obwohl dazu keine Angaben gemacht sind.

Ein ganz ähnliches Verfahren ist aus der DE—B—12 05 744 bekannt, bei dem zunächst sämtliche für ein Schriftzeichen benötigten Druckbefehle in einer Kernspeichermatrix gespeichert sind, die dem getreuen Abbild der Schriftmatrix entspricht. Der Kernspeicher enthält nunmehr Einschreibleitungen entsprechend der größten Schriftmatrix, und beim Auslesen zum Drucken werden in einer kleineren Schriftmatrix durch Schaltmittel geeignete Kernzeilen und Kernspalten übersprungen, und die Druckelement werden über Torstufen in aufeinanderfolgenden Zeilen und Spalten entsprechend der ursprünglichen Schriftmatrix ausgewählt. Aber auch hier sind Hochzahlen und Fußnoten nicht erwählt, so daß in bekannter Weise entweder nur eine größere Schrift oder eine kleinere Schrift geschrieben werden kann, und zwar in dem Sinn eines verfahrens zur Schriftgrößenauswahl bei Elementdruckern.

Der vorliegenden Erfindung liegt daher die Aufgabe zugrunde, das Matrixdrucken auch für gegenüber der Normalschrifthöhe kleinere Schriftzeichen innerhalb ein und derselben Zeile zugänglich zu machen, insbesondere für das Erzeugen von Hochzahlen, Fußnoten und dgl., die innerhalb der vorgegebenen Schriftzeichenhöhe anzuordnen sind.

Die gestellte Aufgabe wird erfindungsgemäß dadurch gelöst, daß beim Umschalten von dem Normalschriftdruckprogramm auf das Kleinschriftdruckprogramm ein elektronisches Umrechnen der jeweils gegebenen Nadelspaltenpositionen eines Normalchriftzeichens auf analoge Nadelspaltenpostionen eines Kleinschriftzeichens bei gleichzeitiger Überlagerung der Höhenverschiebung erfolgt. Ein solches Verfahren ist deshalb besonders praktikabel, weil die im Zeichengenerator gespeicherte Grundmatrix verwendet werden kann, so daß ausgehend von der Grundmatrix keine besondere Maßnahmen erforderlich sind. Die Zuordnung von mehreren Druckprogrammen und die Auswahl des jeweiligen Druckprogrammes ermöglicht es, innerhalb einer einzigen Zeile unter Zugrundelegung von mehreren Druckpässen, Hochzahlen, Fußnoten oder dgl. Zeichen zu drucken.

Nach dem weiteren Verfahren ist vorgesehen, daß das Schreiben der Kleinschriftzeichen in zwei aufeinanderfolgenden Druckpässen erfolgt, wobei der zweite Druckpaß mit der versetzten Nadelreihe erfolgt und daß das Umrechnen der Nadelspaltenpositionen den nachstehenden logischen Gleichungen folgt:

a) für alle geradzahligen Nadelspaltenpositionen

$$[1 \leq i \leq 5] \text{ bzw. } [0 \leq s \leq 9]$$

$$N_i + s/2 = Z2i \text{ bzw. } N'_i + s/2 = Z2i-1$$

b) für alle ungeradzahligen Nadelspaltenpositionen

$$[1 \leq i \leq 5] \text{ bzw. } [0 \leq s \leq 9]$$

$$N_i + \frac{s-1}{2} = Z2i-1 \text{ bzw. } N'_i + \frac{s-1}{2} = Z2i$$

wobei bedeuten

2

EP 0 146 492 B1

Nx: Nadelabschußinformation für die x-te Nadel bei abgesenkter Nadelspalte bzw. einer tieferen Nadelspalt 15a

N'x: Nadelschußinformation für die x-te Nadel bei angehobener Nadelspalte bzw. einer höheren Nadelspalte 15b

Zx: Zeichengeneratorinformation (für alle x>9 gilt Z=kein Nadelschuß)

S: Schiebefaktor. Er gibt an, mit welcher Höhenverschiebung das Kleinschriftzeichen (9a) in bezug auf das Normalschriftzeichen (8a) plaziert wird.

Beispiele: S=0—Kleinschriftzeichen oben (Superscript) S=9—Kleinschriftzeichen unten (Subscript)

i: Indexzeiger. Er gibt die Lage eines Druckpunktes innerhalb des Kleinschriftzeichens an.

Beispiele: i=1 oberster Druckpunkt i=5 unterster Druckpunkt.

Eine vorteilhafte Anwendung des erfindungsgemäßen Prinzips besteht darin, daß bei Umrechnung der Nadelschußinformationen für hochgestellte Zeichen die für Normalschrift unterste Drucknadel Nr. 9 auf die Spaltenposition Nr. 5 und die anderen Drucknadeln analog verlegbar sind. Diese Maßnahme bewirkt, ein mit einer Unterlänge versehenes Zeichen, also z.B. ein kleines "g" als hochgestelltes Zeichen zu schreiben. Hierbei entsteht ein Kleinzeichen von hoher Schriftqualität.

Eine weitere vorteilhafte Anwendung des erfindungsgemäßen Grundgedankens erlaubt analog das Drucken von Fußnoten gleich hoher Qualität, indem bei Umrechnung der Nadelabschußinformation für tiefgestellte Zeichen die für Normalschriftzeichen an höchster Stelle befindliche Drucknadel Nr. 1 auf die Spaltenposition Nr. 5 und die anderen Drucknadeln analog verlegbar sind.

Die Genauigkeit der Zeilenstruktur eines Schriftbildes beim Matrixdrucken wird dadurch sichergestellt, daß jede Schreibzeile mit eingefügtem Kleinschriftzeichen bei unveränderter Papierstellung geschrieben wird.

Der Matrixdrucker zur Durchführung des Verfahrens ist mit einem reversierbaren Matrixdruckkopf der Ein- oder Mehrspalten-Nadelbauart mit in der Spaltenhöhe versetzbaren oder versetzten Drucknadeln, einer Steuereinrichtung einem kombinierten Datenspeicher mit Zeichengenerator, mit d'em ein Normalschriftdruckprogramm und ein Kleinschriftdruckprogramm Schreibbar ist, und Betriebsprogrammen versehen, wobei der Steuerbefehl für das Umschalten von dem Normalschriftdruckprogramm auf das Kleinschriftdruckprogramm aufgrund eines zusätzlichen Hintergrundprogrammes auslösbar ist.

Hierzu wird vorgeschlagen, daß in der Steuereinrichtung beim Umschalten vom Normalschriftdruckprogramm auf das Kleinschriftdruckprogramm die Nadelspaltenpositionen eines Normalschriftzeichens elektronisch umgerechnet werden in analoge Nadelspaltenpositionen eines Kleinschriftzeichens bei gleichzeitiger Überlagerung der Höhenverschiebung.

Hierbei ist noch vorgesehen, daß dei Steuereinrichtung aus einem Mikroprozessor besteht, der mittels einer Ankoppelungsschaltung mit der zugeordneten Datenquelle in Verbindung steht.

In der Zeichnung sind Ausführungsbeispiele der Erfindung schematisch dargestellt, die im folgenden näher beschrieben werden. Es zeigen:

Fig. 1 ein Blockschaltbild für einen an eine Datenquelle angeschlossenen Matrixdrucker mit Einzelheiten der Erfindung,

Fig. 2 die Lage der Drucknadeln im Matrixdruckkopf,

Fig. 3 das Schriftzeichen "A" in Normalschreibweise aufgrund eines Druckpasses,

Fig. 4a das Schriftzeichen "A" in Verkleinerung und höhenverschoben als Hochzeichen mit den Druckpunkten nach einem erste Druckpaß,

Fig. 4b dasselbe Schriftzeichen wie in Fig. 4a mit den Druckpunkten des zweiten Druckpasses und

Fig. 4c das fertige Schriftzeichen wie in den Fig. 4a und 4b nach beiden Druckpässen.

Die in Folge zu schreibenden Schriftzeichen entstammen einem Speicher oder einem Computer, d.h. der Datenquelle 1, die dem Matrix-drucker 2 über eine geeignete Datenlinie 3 Impulse überträgt, wobei an der Schnittstelle im Matrixdrucker 2 das Interface 4 als Verbindungsglied diese Daten von der Datenquelle 1 auf den Matrixdrucker 2 ordnungsgemäß weiterleitet und an die Steuereinrichtung 5, die aus dem Mikroprozessor 5a besteht, weiterführt. In dem Matrixdrucker 2 befindet sich außerdem ein Speicher 6, zu dem ein Zeichengenerator 7 gehört. Dem Zeichengenerator 7 ist ein Normalschriftdruckprogramm 8 zugeordnet, außerdem ein gesondertes Kleinschriftdruckprogramm 9 und ferner ein Hintergrundprogramm 10. Das Normalschriftdruckprogramm 8 dient zum Schreiben mit hoher Schreibgeschwindigkeit, also für einen hohen Ausstoß von Zeichen pro Zeiteinheit. Eine bessere Zeichenqualität bei herabgesetzter Schreibgeschwindigkeit wird durch zeilenweises Schreiben in mehreren, d.h. meist zwei Druckpässen, erzielt, wobei z.B. beide Druckpässe von links nach rechts verlaufen und zwischen den Druckpässen Leerpässe gefahren werden.

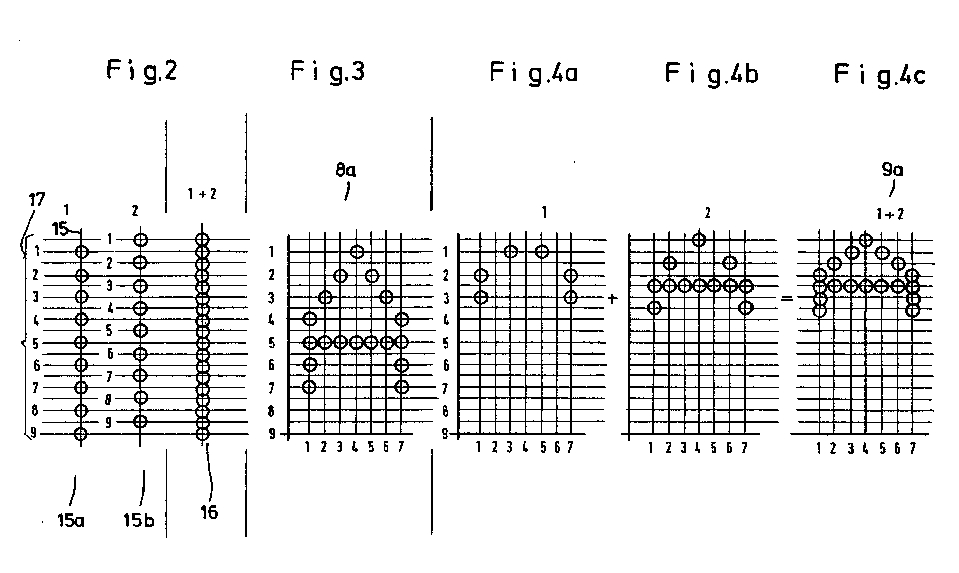

Das Umschalten von dem Normalschriftdruckprogramm 8 auf das Kleinschriftdruckprogramm 9 kann grundsätzlich durch eine elektronische Schaltung herkömmlicher Bauweise erfolgen, wobei von der Datenquelle 1 dem Zeichengenerator 7 der entsprechende Steuerbefehl übermittelt wird. Nach einem besonders vorteilhaften Verfahren erfolgt das Umschalten durch ein noch zu erläuterndes elektronisches Umrechnen der Nadelspaltpositionen 1 bis 9 (Fig. 2, 3 und 4a bis 4c). Hierbei wird die im Zeichengenerator 7 gespeicherte Grundmatrix eines jeden vorhandenen Normalschriftzeichens 8a, z.B. des Zeichens "A"

3

gemäß Fig. 3 ausgenutzt. In dem Zeichengenerator 7 sind über die sonstigen Programme 11 gewöhnlich 192 Zeichen (für lateinische Schrift) bis über 20.000 Zeichen (für chinesische bzw. japanische Schritt) erzeugbar.

Sämtliche Zeichen werden über den Mikroprozessor 5a vom Speicher 6 auf den Matrixdruckkopf 12 über die Drucknadel-Ansteuerung 13 übertragen, wobei in einigen Sonderfällen der Mikroprozessor 5a eine Nadelhubmagnetsteuerung 14 betätigt, um die eine bzw. die zwei vorhandenen Nadelspalten 15 in zwei unterschiedliche Positionen 15a und 15b zu bewegen (Fig. 2). Hierbei besteht eine Nadelspalte 15 aus neun Nadeln mit den Nadelpositionen 1 bis 9. Die Anzahl von neun Nadeln kann selbstverständlich nach oben oder nach unten verändert werden.

In den Fig. 2 bis 4c ist die Verfahrensweise deutlich zu erkennen: Hierbei folgt das Umrechnen der Nadelspaltenpositionen 1 bis 9 den logischen Gleichungen des Patentanspruches 3.

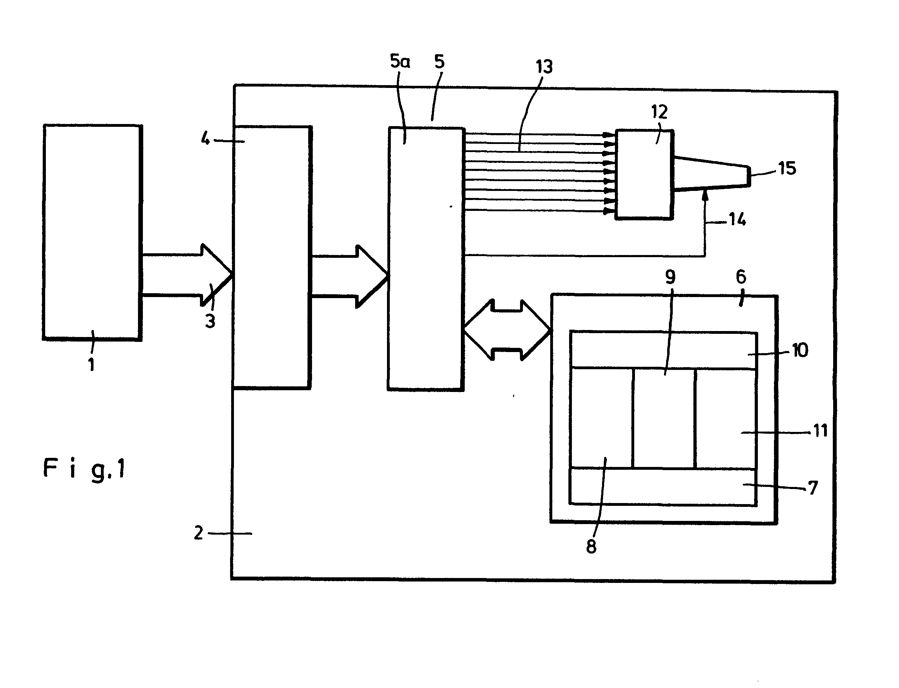

In Fig. 2 ist die Nadelspalte 15 aus einer senkrechten Reihe von neun Nadeln gebildet. Es könnten auch mehrere solcher Nadelspalten 15 nebeneinander in Spaltenrichtung versetzt im Matrixdurckkopf 12 angeordnet sein. Im ausführungsbeispiel wird das Vorhandensein von zwei Nadelspalten dadurch ersetzt, daß die eine Nadelspalte 15 (bestehend aus den Nadeln 1 bis 9) in eine abgesenkte Position 15a und in eine gehobene Position 15b mittels der Nadelhubmagnetsteuerung 14 (Fig. 1) versetzt werden können und daß somit die Druckpässe 1 und 2 das Druckbild rechts in Fig. 2, also eine senkrechte zusammenhängende Linie 16 erzeugen.

In Fig. 3 ist das Normalschriftzeichen 8a mit einem einzigen Druckpaß gedruckt worden, was der erwähnten Schnellschrift entspricht. Dasselbe Zeichen "A" gemäß Fig. 3 kann nunmehr (was für alle gespeicherten 192 bzw. 20.000 Zeichen gilt) als Kleinschriftzeichen 9a erzeugt und gedruckt werden (Fig. 4a bis 4c).

Hierbei wird eine Höhenverschiebung oder eine Absenkung dem gesamten Schriftzeichen überlagert. In dem Druckpaß 1 (Fig. 4a) werden die Druckimpulse für die Nadeln 7 und 5 des Normalschriftzeichens 8a auf die Nadeln 2 und 3 übertragen und die Druckimpulse der Nadel 2 auf die Nadel 1. Das entstehende Schriftzeichen ist in Fig. 4a abgedruckt. Darauf folgt der zweite Druckpaß (Fig. 4b), in dem die Druckimpulse der Nadeln 6 und 4 auf die Nadeln 4 und 3 übertragen werden, wobei die Nadelspalte 15 allerdings in der angehobenen Position 15b steht. Die beiden übereinandergeschriebenen Druckpässe 1 und 2 (Fig. 4a, 4b) ergeben dann das hochgestellte Kleinschriftzeichen 9a gemäß Fig. 4c.

Aus den Fig. 4a, 4b und 4c ergibt sich außerdem die hohe Qualität des Hochzeichens bzw. des Kleinschriftzeichens 9a. Die Schreibzeile 17 wird ohne Papiervorschub geschrieben.

Der Matrixdruckkopf 12 kann auch insgesamt heb- und senkbar sein, falls dadurch die Hubgenauigkeit nicht beeinträchtigt wird. Im übrigen enthält der in Fig. 1 abgebildete Matrixdrucker den reversierbaren Matrixdruckkopf 12, die komplette Steuereinrichtung 5, die an einen kombinierten Datenspeicher 6 mit Zeichengenerator 7 angeschlossen ist, wobei in dem Datenspeicher 6 außer dem Normalschriftdruckprogramm 8 und weiteren Betriebsprogrammen 11 zusätzlich das Kleinschriftdruckprogramm 9 vorgesehen ist und wobei der Steuerbefehl für das Umschalten von dem Normalschriftdruckprogramm 8 auf das Kleinschriftdruckprogramm 9 aufgrund des zusätzlichen Hintergrundprogrammes 10 auslösbar ist.

Das Kleinschriftzeichen 9a kann auch höher geschrieben werden als die obere Zeilenbegrenzung. Hierzu wird die Nadelspalte 15 über die obere Zeilenbegrenzung angehoben oder bei starren Nadelreihen der gesamte Matrixdruckkopf 12.

**Patentansprüche**

1. Verfahren zum Verkleinern und/oder Höhenverschieben von Schriftzeichen in Matrixdruckern, insbesondere zum Erzeugen von Hochzahlen, Fußnoten und dgl. innerhalb der vorgegebenen oder verschobener Schriftzeichenhöhe, bei dem die Schriftzeichen aus Impulsen der Datenquelle (1) über einen Zeichengenerator (7) erzeugt und zeilenweise mit einem Matrixdruckkopf (12) der Ein- oder Mehrspalten-Nadelbauart mit in der Spaltenhöhe versetzbaren oder versetzten Drucknadeln in einen oder mehreren Druckpässen gedruckt werden, wobei mit dem Zeichengenerator (7) ein Normalschriftdruckprogramm (8) und zumindest ein gesondertes Kleinschriftdruckprogramm (9) schreibbar sind und aufgrund eines Steuerbefehls für den Zeichengenerator (7) ein Umschalten von dem Normalschriftdruckprogramm (8) auf das Kleinschriftdruckprogramm (9) oder umgekehrt erfolgt, dadurch gekennzeichnet, daß beim Umschalten von dem Normalschriftdruckprogramm (8) auf das Kleinschriftdruckprogramm (9) ein elektronisches Umrechnen der jeweils gegebenen Nadelspaltenpositionen eines Normalschriftzeichens (8a) auf analoge Nadelspaltenpositionen eines Kleinschriftzeichens (9a) bei gleichzeitiger Überlagerung der Höhenverschiebung erfolgt.

2. Verfahren nach Anspruch 1, dadurch gekennzeichnet, daß das Schreiben der Kleinschriftzeichen in zwei aufeinanderfolgenden Druckpässen erfolgt, wobei der zweite Druckpaß mit der versetzten Nadelreihe erfolgt und daß das Umrechnen der Nadelspaltenpositionen den nachstehenden logischen Gleichungen folgt:

a) für alle geradzahligen Nadelspaltenpositionen

$$[1 \leq i \leq 5] \text{ bzw. } [0 \leq s \leq 9]$$

$$Ni + s/2 = Z2i \text{ bzw. } N'i + s/2 = Z2i - 1$$

b) für alle ungeradzahligen Nadelspaltenpositionen

$$[1 \leq i \leq 5] \text{ bzw. } [0 \leq s \leq 9]$$

$$N_i + \frac{s-1}{2} = Z_{2i-1} \text{ bzw. } N'_i + \frac{s-1}{2} = Z_{2i}$$

wobei bedeuten

$N_x$: Nadelabschußinformation für die x-te Nadel bei abgesenkter Nadelspalte bzw. einer tieferen Nadelspalte (15a)

$N'_x$: Nadelabschußinformation für die x-te Nadel bei angehobener Nadelspalte bzw. einer höheren Nadelspalte (15b)

$Z_x$: Zeichengeneratorinformation (für alle $x > 9$ gilt Z=kein Nadelabschuß)

S: Schiebefaktor. Er gibt an, mit welcher Höhenverschiebung das Kleinschriftzeichen (9a) in bezug auf das Normalschriftzeichen (8a) plaziert wird.

Beispiele: S=0—Kleinschriftzeichen oben (Superscript)
S=9—Kleinschriftzeichen unten (Subscript)

i: Indexzeiger. Er gibt die Lage eines Druckpunktes innerhalb des Kleinschriftzeichens an.

Beispiele: i=1 oberster Druckpunkt
i=5 unterster Druckpunkt.

3. Verfahren nach den Ansprüchen 1 und 2 unter Zugrundelegung einer 9×n-Matrix, dadurch gekennzeichnet, daß bei Umrechnung der Nadelabschußinformationen für hochgestellte Zeichen die für Normalschrift (8a) unterste Drucknadel Nr. 9 auf die Spaltenposition Nr. 5 und die anderen Drucknadeln analog verlegbar sind.

4. Verfahren nach den Ansprüchen 1 bis 3 unter Zugrundelegung einer 9×n-Matrix, dadurch gekennzeichnet, daß bei Umrechnung der Nadelabschußinformationen für tiefgestellte Zeichen die für Normalschriftzeichen (8a) an höchster Stelle befindliche Drucknadel Nr. 1 auf die Spaltenposition Nr. 5 und die anderen Drucknadeln analog verlegbar sind.

5. Verfahren nach einem oder mehreren der Ansprüche 1 bis 4, dadurch gekennzeichnet, daß jede Schreibzeile (17) mit eingefügtem Kleinschriftzeichen (9a) bei unveränderter Papierstellung geschrieben wird.

6. Matrixdrucker zur Durchführung des Verfahrens nach den Ansprüchen 1 bis 5 mit einem reversierbaren Matrixdruckkopf (12) der Ein- oder Mehrspalten-Nadelbauart mit in der Spaltenhöhe versetzbaren oder versetzten Drucknadeln, einer Steuereinrichtung (5), einem kombinierten Datenspeicher (6) mit Zeichengenerator (7), mit dem ein Normalschriftdruckprogramm (8) und ein Kleinschriftdruckprogramm (9) schreibbar ist, und Betriebsprogrammen (11), wobei der Steuerbefehl für das Umschalten von dem Normalschriftdruckprogramm (8) auf das Kleinschriftdruckprogramm (9) aufgrund eines zusätzlichen Hintergrundprogrammes (10) auslösbar ist, dadurch gekennzeichnet, daß in der Steuereinrichtung (5) beim Umschalten von Normalschriftdruckprogramm (8) auf das Kleinschriftdruckprogramm (9) die Nadelspaltenpositionen eines Normalschriftzeichens (8a) elektronisch umgerechnet werden in analoge Nadelspaltenpositionen eines Kleinschriftzeichens (9a) bei gleichzeitiger Überlagerung der Höhenverschiebung.

7. Matrixnadeldrucker nach Anspruch 6, dadurch gekennzeichnet, daß die Steuereinrichtung (5) aus einem Mikroprozessor (5a) besteht, der mittels einer Ankopplungsschaltung (4) mit der zugeordneten Datenquelle (1) in Verbindung steht.

**Revendications**

1. Procédé pour réduire des caractères (ou signes) et/ou les décaler en hauteur dans les imprimantes matricielles, en particulier pour produire des exposants, indices ou équivalents dans les limites de la hauteur de caractère prédéterminée ou de la hauteur décalée, dans lequel les caractères sont produits à partir d'impulsions de la source de données, par l'intermédiaire d'un générateur de caractères et sont imprimés ligne par ligne, en plusieurs passages d'impression, avec une tête d'impression matricielle du type à aiguilles à une ou plusieurs colonnes d'aiguilles, possédant des aiguilles décalables ou décalées sur la hauteur de la colonne, et dans lequel, avec le générateur de caractères, on peut écrire un programme d'impression en écriture normale et au moins un programme d'impression distinct, en petite écriture et, à la suite d'un ordre de commande envoyé au générateur de caractères, il se produit un passage du programme d'impression écriture normale au programme d'impression en petite écriture ou inversement, caractérisé en ce que, au moment du passage du programme d'impression en écriture normale (8) au programme d'impression en petite écriture (9), il s'effectue une conversion électronique des positions dans les colonnes d'aiguilles données pour un caractère normal (8a) en des positions analogues dans les colonnes d'aiguilles correspondant à un caractère de petite écriture (9a), avec superposition simultanée du décalage en hauteur.

2. Procédé selon la revendication 1, caractérisé en ce que l'écriture des caractères de petite écriture s'effectue en deux passages d'impression successifs, le deuxième passage d'impression s'effectuant avec la rangée d'aiguilles décalées et en ce que la conversion des positions dans les colonnes d'aiguilles se fait conformément aux équations logiques suivantes:

a) pour toutes les positions paires dans les colonnes d'aiguilles

$$[1 \leq i \leq 5] \text{ ou } [0 \leq s \leq 9]$$

$$Ni + s/2 = Z2i \text{ ou } N'i + s/2 = Z2i - 1$$

b) pour toutes les positions impaires dans les colonnes d'aiguilles

$$[1 \leq i \leq 5] \text{ ou } [0 \leq s \leq 9]$$

$$Ni + \frac{s-1}{2} = Z2i - 1 \text{ ou } N'i + \frac{s-1}{2} = Z2i$$

Nx: information de lancement de l'aiguille pour la xème aiguille lorsque la colonne d'aiguilles est abaissée ou dans une clonne d'aiguilles plus basse 15a.

N'x: information de lancement de l'aiguille pour la xème aiguille lorsque la colonne d'aiguilles est élevée ou pour une colonne d'aiguilles plus haute 15b.

Zx: information de générateur de caractères (pour tous les x>9, Z=aucun lancement d'aiguilles.

s: facteur de décalage. Il indique avec quel décalage en hauteur le caractère de petite écriture (9a) est placé par rapport au caractère d'écriture normale (8a).

Exemples=s=0—caractère de peetite écriture en haut (puissance) s=9—caractère de petite écriture en bas (indice)

i: repère vecteur d'index. Il donne la position d'un point d'impression à l'intérieur du caractère de petite écriture.

Exemples: i=1—point d'impression extrême supérieur.

i=5—point d'impression extrême inférieur.

3. Procédé selon l'une des revendications 1 et 2, sur la base d'une matrice de 9×N, caractérisé en ce que, dans la conversion des informations de lancement des aiguilles destinées aux caractères en exposant, l'aiguille n° 9, qui est la plus basse pour l'écriture normale (8a) est reportée à la position d'aiguille n° 5 et les autres aiguilles sont reportées de façon analogue.

4. Procédé selon l'une des revendications 1 à 3, en prenant pour base une matrice 9×n, caractérisé en ce que, lors de la conversion des informations de lancement des aiguilles destinées à des signes placés en indice, l'aiguille n° 1 qui se trouve à l'endroit le plus élevé pour la caractère d'écriture normale (8a) peut être reportée à la position n° 5 de la colonne et les autres aiguilles peuvent être reportées de façon analogue.

5. Procédé selon une plusieurs des revendications 1 à 4, caractérisé en ce que chaque ligne d'écriture (17) comportant des caractères en petite écriture (9a) incorporés, est écrite sans changement de position du papier.

6. Imprimante matricielle pour la mise en oeuvre du procédé selon les revendications 1 à 5, munie d'une tête d'impression matricielle réversible (12) du type à aiguilles à une ou plusieurs colonnes possédant des aiguilles décalables ou décalées sur la hauteur de la colonne, un dispositif de commande (5), une mémoire de données combinée (6) avec un générateur de caractères (7) avec lequel on peut écrire un programme d'impression en écriture normale (8) et un programme d'impression en petite écriture (9), et des programmes de service (11), l'ordre de commande pour le passage du programme d'impression en écriture normale (8) au programme d'impression en petite écriture (9) pouvant être déclenché sur la base d'un programme de fond additionnel (10), caractérisée en ce que, dans le dispositif de commande (5) lors du passage du programme d'impression en écriture normale (8) au programme d'impression en petite écriture (9) les positions dans les colonnes d'aiguilles pour un caractère d'écriture normale (8a) sont converties électroniquement en positions analogues dans les colonnes d'aiguilles pour un caractère de petite écriture (9a), avec superposition simultanée du décalage en hauteur.

7. Imprimante matricielle à aiguilles selon la revendication 6, caractérisée en ce que le dispositif de commande (5) est composé d'un microprocesseur (5a) qui est en liaison avec la source de données correspondante (1) à l'aide d'un circuit de couplage (4).

## Claims

1. Process for reducing the size of and/or shifting printed characters in matrix printers, in particular for generating exponents, footnotes and the like within the given or shifted height of the characters, in which the printed characters are generated from pulses of the data source (1) by means of a character generator (7) and are printed line-by-line in one or more printing passes with a matrix print head (12) of single or multiple column wire type with print wires which can be or are offset in column height, whereby a normal character printing program (8) and at least one separate small character printing program (9) can be written with the character generator (7) and switching from the normal character printing program (8) to the small character printing program (9) or vice versa takes place on the basis of a control command for the character generator (7), characterised in that upon switching from the normal character printing program (8) to the small character printing program (9) electronic conversion of the wire column positions in each case of a normal printed character (8a) into analogous wire column positions of a small printed character (9a) takes place with simultaneous superposing of shifting.

2. Process according to Claim 1, characterised in that the small printed characters are written in two successive printing passes, with the second printing pass taking place with the offset row of wires, and that the conversion of the wire column positions follows the logical equations below:

a) for all even-numbered wire column positions

$$[1 \leq i \leq 5] \text{ or } [0 \leq s \leq 9]$$

$$Ni+s/2=Z2i \text{ or } N'i+s/2=Z2i-1$$

b) for all odd-numbered wire column positions

$$[1 \leq i \leq 5] \text{ or } [0 \leq s \leq 9]$$

$$Ni+\frac{s-1}{2}=Z2i-1 \text{ or } N'i+\frac{s-1}{2}=Z2i$$

in which

Nx signifies wire activating information for the xth wire in the case of a lowered wire column or a lower wire column (15a)

N'x signifies wire activating information for the xth wire in the case of a raised wire column or a higher wire column (15b)

Zx signifies character generator information (for all x>9, Z=no wire activating)

S signifies shift factor. It indicates with which shift the small printed character (9a) is placed relative to the normal printed character (8a).

      Examples: 5=0—small printed character above (superscript)
                  5=9—small printed character below (subscript)

i signifies index indicator. It gives the position of an action point within the small printed character.

      Examples: i=1 uppermost action point
                  i=5 lowermost action point.

3. Process according to Claims 1 and 2, taking as a basis a 9×n matrix, characterised in that when converting the wire activating information for superscript characters the print wire No. 9 which is lowermost for normal printing (8a) can be displaced to column position No. 5 and the other print wires can be displaced analogously.

4. Process according to Claims 1 to 3, taking as a basis a 9×n matrix, characterised in that when converting the wire activating information for subscript characters the print wire No. 1 which is in the highest position for normal printed characters (8a) can be displaced to column position No. 5 and the other print wires can be displaced analogously.

5. Process according to one or more of Claims 1 to 4, characterised in that each print line (17) is written with an inserted small printed character (9a) with the paper in an unchanged position.

6. Matrix printer for carrying out the process according to Claims 1 to 5, with a reversible matrix print head (12) of single or multiple column wire type with print wires which can be or are offset in column height, a control device (5), a combined data store (6) with character generator (7), by means of which a normal character printing program (8) and a small character printing program (9) can be written, and operating programs (11), with the control command for switching from the normal character printing program (8) to the small character printing program (9) being able to be triggered on the basis of an additional background program (10), characterised in that in the control device (5) upon switching from the normal character printing program (8) to the small character printing program (9) the wire column positions of a normal printed character (8a) are converted electronically into analogous wire column positions of a small printed character (9a) with simultaneous superposing of shifting.

7. Dot matrix wire printer according to Claim 6, characterised in that the control device (5) consists of a microprocessor (5a) which is connected to the associated data source (1) by means of a coupling circuit (4).

Fig.1

Fig.2    Fig.3    Fig.4a    Fig.4b    Fig.4c

EP 0 146 492 B1

Fig.2

17
15
1   2   1+2
1
2
3
4
5
6
7
8
9

15a   15b   16

Fig.3

8a

1
2
3
4
5
6
7
8
9

1 2 3 4 5 6 7

Fig.4a

1

1
2
3
4
5
6
7
8
9

1 2 3 4 5 6 7

+

Fig.4b

2

1 2 3 4 5 6 7

=

Fig.4c

9a

1+2

1 2 3 4 5 6 7